# EUROPÄISCHE PATENTSCHRIFT

(11) **EP 2 428 787 B1**
(45) Veröffentlichungstag und Bekanntmachung des Hinweises auf die Patenterteilung: **12.06.2019**
(21) Anmeldenummer: 11007221.2
(22) Anmeldetag: 06.09.2011
(51) Int. Cl.: G01L 25/00, G01G 23/01, B21D 22/28

(54) **Verfahren und Vorrichtung zum Kalibrieren eines Ladungsverstärkers einer piezoelektrischen Messkette**
Method and device for calibrating a charge amplifier of a piezoelectric measurement chain
Procédé et dispositif de calibrage d'un amplificateur de charge d'une chaîne de mesure piézoélectrique

(30) Priorität: 08.09.2010 DE 102010044767
(43) Veröffentlichungstag der Anmeldung: 14.03.2012
(73) Patentinhaber: Hottinger Baldwin Messtechnik GmbH, 64293 Darmstadt (DE)
(72) Erfinder: Guckes, Michael, 64625 Bensheim (DE)
(74) Vertreter: Staudte, Ralph

(56) Entgegenhaltungen:
- DE-A1-102005 006 666
- US-A- 4 549 620
- US-A- 4 715 211

## Beschreibung

Die Erfindung betrifft ein Verfahren zum Kalibrieren eines Ladungsverstärkers einer piezoelektrischen Messkette mit mindestens einem piezoelektrischen Kraftaufnehmer sowie eine Vorrichtung zur Durchführung des Kalibrierverfahrens.

In der industriellen Fertigung oder Montage werden viele Produktionsabläufe durch eine Gerätesteuerung an produzierenden Maschinen beeinflusst. Dabei kann durch die Gerätesteuerung häufig auch die Qualität des Fertigungsprozesses vorgegeben oder überwacht werden. Dazu müssen zunächst die qualitätsbeeinflussenden Steuerungsprozesse erfasst und ausgewertet werden, um die produzierenden Maschinen in einem optimalen Bereich zu steuern oder diesen zu überwachen.

Derartige qualitätsbeeinflussende Prozesse an produzierenden Maschinen oder hergestellten Produkten können häufig durch Messung einer physikalischen Größe dieser Prozesse wie einer Kraft, eines Drucks, eines Drehmoments oder einer Beschleunigung ermittelt und durch Vergleich mit Referenzgrößen einer bestimmten Qualität oder Güte zugeordnet werden. Dazu ist eine Messschaltung für die die Qualität bestimmende physikalische Größe notwendig, die dann so zu kalibrieren ist, dass damit ein qualitätsbestimmender Produktionsprozess gesteuert oder überwacht werden kann. Häufig sind derartige qualitätsbestimmende Produktionsprozesse auf die Überwachung einer Kraft zurückzuführen, die dazu erfasst und mit einer vorgegebenen qualitätsbestimmenden Größe verglichen werden muss, wozu es einer entsprechenden Kalibrierung bedarf. Dazu werden Messketten mit Aufnehmern eingesetzt, die die im Prozess eingesetzte Kraft erfassen, die dann in entsprechenden Messverstärkern in eine proportionale elektrische Größe umgewandelt und durch eine Kalibrierung in einen vergleichbaren Wert ausgegeben wird, um diesen mit den gewünschten Prozessgrößen vergleichen zu können.

Die Kalibrierung derartiger Aufnehmer-Messketten ist aber schon aus der Wäge- oder Kraftmesstechnik bekannt, wo eine Kraftwirkung eines Prozesses oder eines Gegenstandes ermittelt und dessen Größe als vergleichbarer Messwert angegeben oder überwacht wird. Dazu werden die Aufnehmer oder die gesamte Messkette meist in einer externen Vorrichtung mit bekannten Referenzgrößen verglichen, wobei als Kalibrierung die jeweiligen Ausgangsmesssignale proportionalen skalierten Werten zugeordnet werden.

Eine externe Vorrichtung zur Prüfung und Kalibrierung von Behälterwaagen ist aus der DE 102 37 513 B4 bekannt. Bei dieser Kalibriervorrichtung ist ein biegesteifer Rahmen vorgesehen, in dem eine hydraulische Belastungsvorrichtung angeordnet ist. Unterhalb der Belastungsvorrichtung wird die Waage mit mindestens einer Wägezelle angeordnet, auf der ein modifizierter Behälterfuß abgestellt wird. Zur Kalibrierung wird dann die Waage mit einem Anfangswert und mindestens einem maximalen Endwert belastet. Dazu ist insbesondere eine Referenzwägezelle vorgesehen, durch die den Anfangs- und Endwerten feste Gewichts- oder Kraftwerte zugeordnet werden, aus denen in der Waage mit einer extern zugeordneten Rechenvorrichtung nach einer linearen Funktion aus den Messspannungswerten die Gewichtswerte errechnet werden. Mit einer derartigen Kalibriervorrichtung können nur separate Waagen oder Wägezellen mit definierten Verformungskörpern kalibriert werden. Eine Kalibrierung von Kraftmessketten, die in prozesssteuernden oder -überwachenden Maschinen oder Vorrichtungen fest eingebaut sind, ist damit meist nicht möglich.

Aus der DE 44 33 163 A1 ist eine Vorrichtung zum Kalibrieren von Waagen bekannt, die fest in einem Rollenprüfstand eingebaut sind. Dabei ist um den Rollenprüfstand ein Widerlagerrahmen vorgesehen, auf dem sich eine Belastungsvorrichtung abstützt, die andererseits auf dem Rollenprüfstand steht. In der Belastungsvorrichtung ist eine Referenzwaage angeordnet, deren Bezugswerte der Waage als Anfangs- und Endwerte in einer extern zu den Wägezellen angeordneten Rechenvorrichtung zugeordnet werden. Durch den separaten Widerlagerrahmen und die zusätzliche Belastungsvorrichtung ist ein derartiges Kalibrierverfahren sehr aufwendig und auch nur für zwischengelagerte Wägezellen oder Waagen geeignet.

Ein hochgenaues Kalibrierverfahren für Kraftmessdosen und Wägezellen ist aus der DE 199 11 086 C2 bekannt, das mit einer sogenannten Kraft-Normalmessmaschine arbeitet. In dieser Kraft-Normalmessmaschine werden die jeweils zu kalibrierenden Wägezellen mit mehreren Totlastgewichten bis mindestens zur Nennkraft als maximale Kraftbelastung selbsttätig belastet und die Ausgangssignale der mit den Kraftmessdosen oder Wägezellen verbundenen Messverstärker dem jeweiligen Gewichtswert der Totlasten zugeordnet. Mit einer derartigen Vorrichtung kann jedoch die Kalibrierung vor Ort im eingebauten Zustand der Kraftmesskette meist nicht erfolgen.

Für hochdynamische Kraftmessprozesse sind viele Kraftmessvorrichtungen mit Wägezellen oder anderen Dehnungsmessstreifen-Aufnehmern zu träge, so dass dafür Messketten mit piezoelektrischen Kraftaufnehmern mit angeschlossenen Ladungsverstärkern eingesetzt werden. Eine derartige Messkette mit einem piezoelektrischen Kraftaufnehmer und einem daran angeschlossenen Ladungsverstärker ist aus der EP 0 055 345 A1 bekannt, die zur Überwachung der dynamischen Körperfunktionen von Säuglingen dient. Dazu stützt sich die Liegefläche des Säuglings auf einem piezoelektrischen Kraftaufnehmer ab, der bei einer Bewegung des Säuglings eine elektrische Ladung erzeugt, die der Kraftbelastung der Bewegung proportional ist. Dieser Aufnehmer ist mit einem Ladungsverstärker verbunden, der im Wesentlichen aus einem rückgekoppelten Operationsverstärker besteht. Durch die Bemessung der Rückkopplungsbauelemente kann die Verstärkung des Ausgangssignals des Ladungsverstärkers eingestellt werden, an dessen Ausgang Spannungswerte anstehen, die der Größe der Kraftbelastung proportional sind. Eine Kalibrierung dieser Messkette ist in der EP 0 055 345 A1 allerdings nicht beschrieben. Dabei ist eine Kalibrierung der Messkette nur mit Hilfe einer Referenzbewegung als Belastung denkbar, deren Größe als Messwert erfasst und einem vorgegebenen Bewegungsgrad zugeordnet wird. Aufgrund der Messspannung ohne Bewegung oder Belastung ergibt sich eine lineare Funktion, durch die für jede Ausgangsspannung auf einer Geraden ein Messwert zuordenbar ist, der proportional zu der Kraftbelastung verläuft. Dies ist aber wegen der fest dimensionierten Ladungsverstärkerschaltung nur am Herstellungsort der Messkette mit einer vorgegebenen Referenzbelastung möglich und kann nachträglich im Laufe der Überwachungsprozesse nicht mehr neu vorgenommen werden.

Aus der US 4 715 211 A ist eine Vorrichtung bekannt, mit der ein Drehmoment eines Schraubenschlüssels oder eines ähnlichen Werkzeugs gemessen werden kann. Die Vorrichtung umfasst ein Gehäuse, eine Vielzahl von Bedienungselementen, eine Digitalanzeige, eine elektrische Schaltung und einen Drehmomentaufnehmer, der unter Verwendung einer Dehnungsmessstreifen-Brücke ein einwirkendes Drehmoment in ein elektrisches Messsignal umwandeln kann. Eine Bedienungsperson kann mit einem ersten Potentiometer die Anzeige auf null stellen, wenn kein Drehmoment anliegt, und mit einem zweiten Potentiometer die Anzeige auf den richtigen Wert einstellen, wenn ein bekanntes Drehmoment anliegt. Auf diese Weise kann die Vorrichtung kalibriert werden. Wenn nach der Kalibrierung das Drehmoment eines Werkzeugs gemessen werden soll, so wird das Werkzeug mit Hilfe eines speziellen Adapters mit der Vorrichtung verbunden. Es sind weder eine piezoelektrische Messkette mit einem piezoelektrischen Kraftaufnehmer und einem daran angeschlossenen Ladungsverstärker noch eine Kalibrierung eines derartigen Ladungsverstärkers beschrieben. Zudem muss die Kalibrierung der Vorrichtung immer durch eine Bedienungsperson manuell durchgeführt werden.

Weiterer Stand der Technik sind die Druckschriften US 4 549 620 und DE 10 2005 006 666 A1.

Der Erfindung liegt die Aufgabe zugrunde, die Kalibrierung einer piezoelektrischen Messkette so zu verbessern, dass diese innerhalb einer Vorrichtung zur Prozessüberwachung oder -steuerung auf einfache Weise kalibriert werden kann.

Diese Aufgabe wird durch die in den Patentansprüchen 1 und 8 angegebene Erfindung gelöst. Weiterbildungen und vorteilhafte Ausführungsbeispiele der Erfindung sind in den Unteransprüchen angegeben.

Die Erfindung hat den Vorteil, dass durch die in der Messschaltung integrierte Rechenschaltung ohne externe Belastungsvorrichtungen auf einfache Weise eine Kalibrierung der Messkette vorgenommen werden kann. Insbesondere sind dazu keine Referenzbelastungsmaschinen oder Referenzaufnehmer erforderlich, sondern die Kalibrierung kann vorteilhafterweise beim jeweiligen Anwendungsfall ausgeführt und auf den vorgesehenen Messbereich eingestellt werden. Dieses Verfahren hat gleichzeitig den Vorteil, dass es im normalen Betriebszustand der Messkette oder bei den durchführbaren Prozessvorgängen selbsttätig vorgenommen werden kann, ohne dass der Aufnehmer vom Messobjekt demontiert werden müsste und somit vorteilhafterweise das Kalibrierverfahren auch vor Ort des Messobjektes erfolgen kann. Selbsttätig bedeutet dabei, dass die Kalibrierung nur mithilfe eines externen Schaltsignals und der erfindungsgemäßen Messschaltung ausführbar ist, die lediglich eine zusätzliche elektronische Rechenschaltung umfasst.

Die Erfindung hat zusätzlich den Vorteil, dass damit dynamische Messvorgänge bis ca. 40 kHz und gleichzeitig die Kalibrierung durchgeführt werden können. Dabei ist es lediglich erforderlich, dass beim Kalibriervorgang eine Maximalbelastung an einem bekannten Referenzobjekt auftritt, ohne dass ein skalierter Zahlenwert für dessen physikalische Größe vorliegen muss.

Die Erfindung hat dabei gleichzeitig den Vorteil, dass durch die Kalibrierung mittels einer Maximalkraftbelastung eine hohe Messgenauigkeit erzielbar ist. Des Weiteren ist das erfindungsgemäße Kalibrierverfahren in kurzer Zeitspanne wie bei einem normalen Messvorgang durchführbar und benötigt neben dem Ladungsverstärker auch nur eine zusätzliche Rechenschaltung zur zeitgleichen Kalibrierung. Dabei ist die gesamte Messschaltung aus Ladungsverstärker und Rechenschaltung in einem kompakten Gehäuse integrierbar.

Da bei einem piezoelektrischen Aufnehmer mit Ladungsverstärker als Messkette die Ausgangsspannung proportional zur Kraftbelastung auf einer Geraden verläuft, benötigt die Erfindung neben dem Nullpunkt vorteilhafterweise nur noch einen weiteren bekannten Referenzmesspunkt zur Kalibrierung der gesamten Messkette. Dabei umfasst der Bereich zwischen dem Nullpunkt und der maximalen Kraftbelastung als Referenzmesspunkt vorteilhafterweise bereits alle zuordenbaren Messwerte.

Eine besondere Ausführung der Erfindung unter Berücksichtigung eines Überlastgrenzwerts unterhalb der Maximalkraftbelastung hat bei der Kalibrierung den Vorteil, dass auch bei einer späteren Überschreitung des Überlastgrenzwerts der Ladungsverstärker nicht übersteuert wird und damit die Kalibrierung auch in diesem Bereich eine genaue Messung und damit eine genaue Überwachung oder Steuerung der Prozesse gewährleistet.

Eine weitere besondere Ausführung der Erfindung unter Berücksichtigung eines Mindesteingangssignalbereichs und eines maximalen Eingangssignalbereichs des piezoelektrischen Aufnehmers hat den Vorteil, dass die Kalibrierung nur im linearen Messbereich des Aufnehmers durchgeführt wird und gleichzeitig eine Überlastung des Aufnehmers feststellbar und signalisierbar ist.

Bei einer zusätzlichen besonderen Ausführung ist noch eine TEDS-Speicherschaltung (TEDS = Transducer Electronic Data Sheet) vorgesehen, die den Vorteil hat, dass darin auch bereits für die Kalibrierung notwendige Aufnehmerkennwerte auslesbar gespeichert sind, so dass eine vorherige externe Eingabe z. B. der Empfindlichkeit, der Nennkraftbelastung und der Grenzwerte für den Linearbereich des eingesetzten Aufnehmers entfallen können.

Die Erfindung wird anhand eines Ausführungsbeispiels, das in der Zeichnung dargestellt ist, näher erläutert. Es zeigen:
- Fig. 1:: ein Blockschaltbild einer Messkette eines piezoelektrischen Aufnehmers mit angeschlossener Messschaltung,
- Fig. 2:: eine Kalibrierkennlinie am Ausgang des Ladungsverstärkers, und
- Fig. 3:: eine Messkennlinie eines dynamischen Produktionsprozesses.

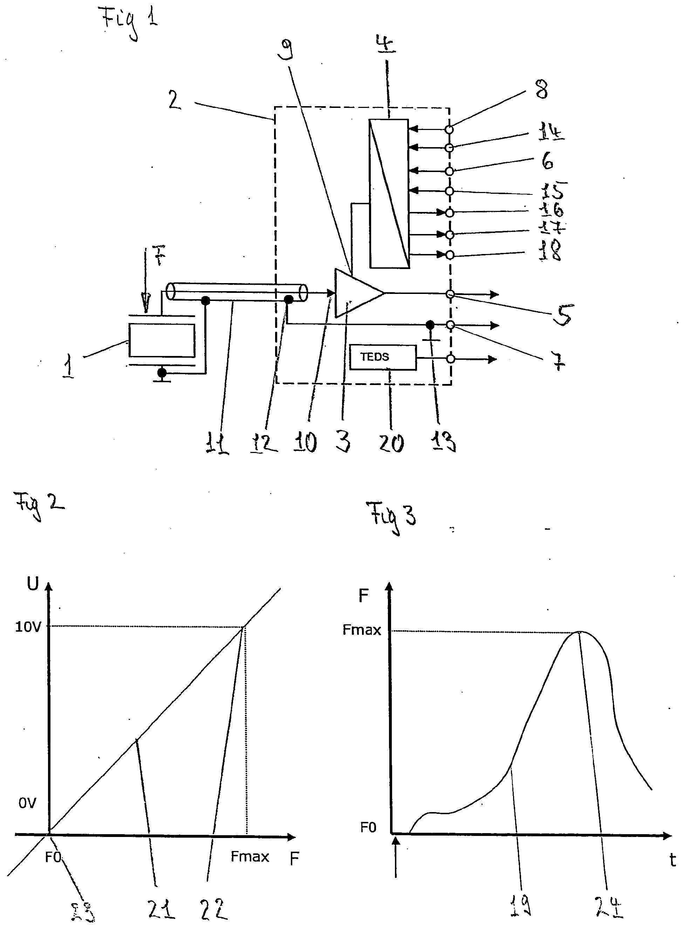

In Fig. 1 der Zeichnung ist eine Messkette schematisch dargestellt, die einen piezoelektrischen Aufnehmer 1 und eine Messschaltung 2 umfasst, die über ein Anschlusskabel 11 miteinander verbunden sind, wobei die Messschaltung 2 mindestens einen Ladungsverstärker 3 und mindestens eine programmgesteuerte elektronische Rechenschaltung 4 enthält, mit der vorzugsweise ein Herstellungsprozess für eine Aluminiumtrinkflasche überwacht wird.

Dabei ist zur Herstellung der Trinkflasche vorzugsweise eine druckgesteuerte Produktionsmaschine für den Herstellungsprozess vorgesehen, mit der in einen Aluminiumrohling ein kurzer Druckimpuls eingeleitet wird, der diesen mit seiner Außenwandfläche an die Innenwände einer Trinkflaschenform presst. Zur Qualitätsüberwachung des Herstellungsprozesses wird der Druckverlauf beziehungsweise der dazu notwendige Kraftverlauf 19 während des Herstellungsprozesses erfasst, der in Fig. 3 der Zeichnung beispielhaft als Referenzkraftverlauf dargestellt ist. Dazu wird in einem oder mehreren Referenz-Herstellungsprozessen eine Trinkflasche in gewünschter guter Qualität hergestellt und deren Druck- oder Kraftverlauf 19 als Referenzverlauf erfasst. Um die Qualität bei weiteren Herstellungsvorgängen überwachen zu können, muss die in die Produktionsmaschine eingebaute Messkette entsprechend kalibriert werden. Dazu ist es erforderlich, dass die Messkette während des Referenzherstellungsprozesses in der Maschine eingebaut ist und während eines derartigen dynamischen Herstellungsprozesses die Messkette kalibriert wird, da derartige Prozesse nicht statisch außerhalb der Produktionsmaschine reproduzierbar sind oder ein dynamischer Kalibriervorgang außerhalb der Produktionsmaschine sehr aufwendig wäre. Deshalb umfasst die Erfindung eine Messkette mit einem piezoelektrischen Kraftaufnehmer 1 zur Qualitätsüberwachung eines Herstellungsprozesses, deren Ladungsverstärker 3 während eines Referenzherstellungsvorgangs kalibriert wird und bei der die Messkette in der Maschine eingebaut verbleibt, wobei der Kalibriervorgang weitgehend selbsttätig durch eine programmgesteuerte elektronische Rechenschaltung 4 erfolgt.

Derartige piezoelektrische Aufnehmer 1 erzeugen bei einer Belastung mit einer Kraft F in ihrem Piezomaterial eine verhältnismäßig geringe elektrische Ladung Q, die zu der eingeleiteten Kraft proportional ist. Zur Auswertung dieser Messgröße wird die Ladung Q als Eingangssignalwert über ein Anschlusskabel 11 innerhalb einer Messschaltung 2 einem Ladungsverstärker 3 zugeführt, der die Ladung Q verstärkt und in eine Gleichspannung als Ausgangsmesssignal umwandelt. Dabei wird als Verbindungskabel 11 vorzugsweise ein Koaxialkabel verwendet, um den kapazitiven Einfluss bei Messfrequenzen von ca. 20 kHz bis 40 kHz gering zu halten. Derartige Ladungsverstärker 3 werden dabei meist unter Verwendung von Operationsverstärkern realisiert. Dabei besteht die Besonderheit in der kapazitiven Rückkopplung auf den invertierenden Eingang 10, wobei im Grunde mit einer nicht dargestellten Rückkopplungskapazität die Verstärkung der Messkette, insbesondere des Ladungsverstärkers 3, in einem relativ großen Bereich einstellbar ist. Deshalb wird in den invertierenden Eingang 10 des Operationsverstärkers 3 die zu messende Ladung Q über das Anschlusskabel 11 eingeleitet. Andererseits liegt der nichtinvertierende Eingang 12 des Operationsverstärkers 3 auf Massepotential 13 und hat Verbindung zum Ausgang 7, der einen 0-Volt-Ausgang oder Masseausgang darstellt.

Gleichzeitig umfasst der Ladungsverstärker 3 noch einen Messsignalausgang 5, an dem gegenüber dem 0-Volt-Ausgang 7 eine Ausgangsspannung als Messsignal anliegt, die zu der Kraftbelastung am Piezoaufnehmer 1 proportional ist. Dabei wird der Ladungsverstärker 3 vorzugsweise gemäß einer Kalibrierkennlinie 21 so eingestellt, dass er bei einer maximalen Kraftbelastung *Fₘₐₓ* eine maximale Ausgangsspannung 22 von 10 Volt Gleichspannung nicht überschreitet, da er bis zu diesem Bereich linear arbeitet und nicht übersteuert. Eine entsprechende Ausgangsspannungskennlinie 21 als Kalibrierkennlinie ist in Abhängigkeit von der Kraftbelastung F des piezoelektrischen Aufnehmers 1 bis zu einer Maximalkraftbelastung *Fₘₐₓ* in Fig. 2 der Zeichnung dargestellt. Dabei sollte die Maximalkraftbelastung *Fₘₐₓ* nicht höher als die Nennbelastung des piezoelektrischen Aufnehmers 1 sein, die bauartabhängig und daher bekannt ist.

Zur Einstellung der Verstärkung in Form einer Kalibrierung enthält die Messschaltung 2 neben dem Ladungsverstärker 3 als Rechenschaltung noch eine programmgesteuerte elektronische Rechenschaltung 4, die mit einem Steuereingang 9 des Ladungsverstärkers 3 verbunden ist. Dabei enthält die Rechenschaltung 4 zur Einstellung der Verstärkung und zur Erfassung, zur Steuerung oder zur Überwachung der vorgesehenen Prozesse vorzugsweise vier Eingänge 8, 14, 6, 15 und drei Ausgänge 16, 17, 18. So ist zur Speisung der Messschaltung 2 ein Versorgungsspannungseingang 8 vorgesehen, der mit einer Versorgungsspannung von 18 Volt bis 30 Volt Gleichspannung beschaltet ist, die auch den Ladungsverstärker 3 speist. Daneben ist noch ein Kalibriereingang 14 vorgesehen, der zum selbsttätigen Kalibrieren des Ladungsverstärkers 3 dient. Dabei wird beim selbsttätigen Kalibrieren die Verstärkung des Ladungsverstärkers 3 so eingestellt, dass eine eingeleitete maximale Kraftbelastung *Fₘₐₓ* einem Ausgangsmesssignal von 10 Volt als maximaler Ausgangsspannung zugeordnet wird.

Vorzugsweise kann das Ausgangsmesssignal aber auch so eingestellt werden, dass es eine Überlastgrenze als Überlastgrenzwert berücksichtigt, so dass der Ladungsverstärker 3 beim Überschreiten des Überlastgrenzwerts noch nicht übersteuert, sondern noch im linearen Bereich verbleibt.

Des Weiteren besitzt die elektronische Rechenschaltung 4 noch einen Mess- und Rückstelleingang 6, mit dem die Messung ausgelöst wird. Dazu wird zuvor mit einem Gleichspannungsimpuls von 12 Volt bis 30 Volt der Ladungsverstärker 3 zurückgesetzt, so dass dieser auch bei einer beliebigen Kraftbelastung ein Ausgangsmesssignal als Ausgangsspannung von 0 Volt am Messsignalausgang 5 aufweist, wodurch die Eingangskondensatoren des Ladungsverstärkers 3 gelöscht werden. Damit kann gleichzeitig der Beginn der Messung auf ein hohes Kraftniveau gelegt werden. Daneben weist die Rechenschaltung 4 noch einen Digitaleingang 15 auf, der vorzugsweise zur Eingabe und Änderung von Grenzwerten dient. Zusätzlich enthält die Rechenschaltung 4 noch einen ersten Digitalausgang 16 und einen zweiten Digitalausgang 17, durch die vorzugsweise eine Unter- oder Überschreitung von zulässigen Aufnehmerbelastungen durch Digitalsignale ausgebbar ist. Daneben enthält die Rechenschaltung 4 noch einen Ethernet-Ausgang 18, der eine Schnittstelle zum Ethernet darstellt und eine Steuerung nebst Ein- und Ausgabe von Messwerten der Messschaltung 2 über das Ethernet ermöglicht.

Die Funktion des erfindungsgemäßen Verfahrens der Messkette wird beispielhaft anhand eines überwachten Herstellungsprozesses für eine Aluminium-Trinkflasche beschrieben. Denn die Güte oder Qualität eines Herstellungsprozesses einer derartigen Trinkflasche kann mit der vorstehend beschriebenen Messkette zuverlässig überwacht werden. Zur Herstellung einer derartigen Aluminiumtrinkflasche wird diese aus einem vorgearbeiteten nicht dargestellten zylinderartigen Rohling gefertigt, der in eine Flaschenform eingesetzt und durch eine hohe Druckbelastung an die Wände der Form gepresst wird und dadurch seine fertige Ausbildung erhält. Dabei ist die Qualität der fertigen Trinkflasche im Grunde von dem Druckluft- oder Kraftverlauf 19 über der Zeit t abhängig, wie er in Fig. 3 der Zeichnung dargestellt ist. So wird auf den Rohling ein bestimmter Druckimpuls aufgegeben, der im Laufe des Pressvorgangs ein Maximum erreicht und sich dann wieder verringert, wenn sich das Flaschenvolumen innen auf seine vorgesehene Größe ausgedehnt hat. Hierzu muss der Pressdruck einen vorgegebenen Maximaldruck beziehungsweise eine Maximalkraft *Fₘₐₓ* erreichen, damit die Flaschenwände an den inneren Formwänden dicht anliegen. Gleichzeitig darf der Maximaldruck nicht zu hoch sein, da der Ausformungsvorgang dann zu schnell verläuft und deshalb zu Rissen an den Wänden führen kann.

Deshalb kann ein optimaler Herstellungsprozess durch die Überwachung des bei jedem Produktionsvorgang erreichbaren vorgegebenen Maximaldrucks beziehungsweise der daraus resultierenden Maximalkraftbelastung 24 ermittelt werden. Dazu wird zunächst eine entsprechende Maximalkraftbelastung 24 durch die Herstellung mindestens einer Referenzflasche vorzugsweise im praktischen Versuch ermittelt und damit der Ladungsverstärker 3 der Messkette automatisch kalibriert, um eine Aussage über die ausreichende Güte des Produktionsvorgangs machen zu können. Dabei ist der piezoelektrische Aufnehmer 1 mit der nicht dargestellten Druckquelle des Herstellungsgeräts verbunden und erfasst den Druck- oder Kraftverlauf 19 des Pressvorgangs in Form einer elektrischen Ladung *Q.* Hierfür ist ein piezoelektrischer Kraftaufnehmer 1 vorgesehen, der einen derartigen dynamischen Druck- oder Kraftverlauf 19 bis zu 40 kHz erfassen kann und einen ausreichenden Nennkraftbereich von beispielsweise 100 kN aufweist. Bei einem derartigen Eingangsbereich erzeugt der piezoelektrische Aufnehmer 1 eine elektrische Ladung *Q* von 5.000 pC bis 400.000 pC als Eingangssignalwert für den Ladungsverstärker 3. Diese ergibt sich bauartbedingt aufgrund der gewählten piezoelektrischen Kristalle wie z. B. Quarz oder Galliumphosphat, die eine Piezokonstante d von beispielsweise 4 pC/N aufweisen, mit der der piezoelektrische Aufnehmer 1 herstellungsseitig kalibriert ist. Diese Aufnehmerdaten können von einer externen nicht dargestellten Auswertevorrichtung in den Digitaleingang 15 der elektronischen Rechenschaltung 4 eingegeben werden oder als Aufnehmerkennwerte in die TEDS-Schaltung (Transducer Electronic Data Sheet) vorher eingeschrieben worden sein und der nachgeschalteten Auswerteelektronik zur Verfügung stehen.

Zur selbsttätigen Kalibrierung wird zunächst der Messvorgang zur Herstellung der Referenzflasche durch eine Eingangsspannung am Mess- und Rückstelleingang 6 aktiviert, indem dort mit einem Spannungsimpuls von 12 Volt bis 30 Volt der Ladungsverstärker 3 auf ein Ausgangssignal von 0 Volt als Nullpunkt 23 gesetzt wird, wobei dann mit einer Eingangsspannung von 0 Volt bis 5 Volt am Mess- und Rückstelleingang 6 die Messung weiter aktiviert bleibt. Dann wird mit einem Spannungsimpuls von vorzugsweise 24 Volt als erstes Schaltsignal der Kalibriereingang 14 für ca. eine Sekunde beaufschlagt, wodurch der Kalibriervorgang aktiviert wird. Dies kann von einer externen nicht dargestellten Auswertevorrichtung selbsttätig gesteuert werden, mit der auch gleichzeitig der Pressvorgang der Referenzflasche ausgelöst wird. Beim nachfolgenden Pressvorgang wird dann der Druckverlauf beziehungsweise der Kraftverlauf 19 vom Aufnehmer 1 erfasst, wobei dabei ein Referenzkraftmaximum *Fₘₐₓ* als Maximalkraftbelastung 24 für den ordnungsgemäßen Pressvorgang festgelegt wird. Durch eine erneute Beaufschlagung des Kalibriereingangs 14 mit einem weiteren Spannungsimpuls von +24 Volt als zweites Schaltsignal wird dann der Mess- und Kalibriervorgang beendet.

Dabei hat die elektronische Rechenschaltung 4 vorab geprüft, ob das Eingangssignal des Aufnehmers 1 am Ladungsverstärker 3 zwischen den über den Digitaleingang 15 eingegebenen und eingespeicherten Grenzwerten 5.000 pC und 600.000 pC liegt. Denn in dem Ladungsbereich des piezoelektrische Aufnehmers 1 mit einem Mindesteingangssignalwert *Qₘᵢₙ* ab ca. 5.000 pC ist dieser hinreichend genau mit einem Messfehler von +/- 0,5 %. Dabei ist der Aufnehmer 1 bauartbedingt für einen Nennlastbereich von 100 kN bis zum Überlastbereich ausgelegt, der ab einem maximalen Eingangssignalgrenzwert *Qₘₐₓ* von beispielsweise 600.000 pC beginnt. Sind die Eingangssignalwerte nicht zwischen 5.000 pC und 600.000 pC, so wird dies durch entsprechende Signale an dem ersten oder zweiten Digitalausgang 16, 17 als Ausgänge der Messschaltung 2 ausgegeben, und der Mess- und Kalibriervorgang muss wiederholt werden.

Liegt die Maximalkraftbelastung 24 hingegen im Bereich zwischen dem Mindesteingangssignalwert *Qₘᵢₙ* von 5.000 pC und dem maximalen Eingangssignalgrenzwert *Qₘₐₓ* von 600.000 pC, so wird der Ladungsverstärker 3 über die Rechenschaltung 4 automatisch oder selbsttätig kalibriert. Dazu wird die Verstärkung des Ladungsverstärkers 3 für die Maximalkraftbelastung 24 auf eine maximale Ausgangsspannung am Messsignalausgang 5 von +10 Volt eingestellt, der gleichzeitig die Aussage zugeordnet ist, dass der Pressvorgang qualitativ in Ordnung war.

Vorzugsweise wird noch eine Überlastgrenze von vorzugsweise 5 % bis 20 % berücksichtigt, so dass der Ladungsverstärker 3 bei der festgelegten Maximalkraftbelastung 24 beispielsweise eine Ausgangsspannung am Messausgang 7 bei 5 % von 9,5 Volt liefert. Dies wurde programmgesteuert zuvor am Digitaleingang 15 der Rechenschaltung 4 eingegeben, an dem auch beliebige andere Überlastgrenzen programmgesteuert eingebbar sind. Eine derartige Überlastgrenze ist sinnvoll, da bei derartigen Herstellungsprozessen ein vorgebbarer Toleranzbereich von mindestens +/- 5 % kalibriert werden sollte, in dem erfahrungsgemäß noch von einem ordnungsgemäßen Herstellungsvorgang bei der Pressung von Trinkflaschen ausgegangen werden kann und der beispielsweise bei Ausgangsspannungswerten zwischen 9 Volt und 10 Volt liegt, wobei dann der Ladungsverstärker 3 auch noch nicht übersteuert ist.

Die entsprechend kalibrierten Messsignalausgangswerte als Ausgangsspannung am Messsignalausgang 5 können dann in einer nachfolgenden nicht dargestellten Auswerteschaltung bei Überschreitung eines Toleranzwertebereichs zwischen 9 Volt und 10 Volt bei den nachfolgenden Herstellungsvorgängen als "schlecht" oder "fehlerhaft" angezeigt oder signalisiert werden. Gleichzeitig ist es aber auch möglich, die für den Pressvorgang verwendete Maschine mithilfe der kalibrierten Ausgangssignale direkt mit einer externen Auswertevorrichtung so zu steuern, dass der als optimal festgestellte Wert von 9,5 Volt als Ausgangsspannung bei jedem Herstellungsvorgang erreicht wird. Sollte sich hingegen beim Kalibriervorgang herausstellen, dass der eingestellte Druck für eine einwandfreie Ausformung der Aluminiumflaschen nicht ausreicht, so könnte die Kalibrierung mit einem höheren Druck als maximale Referenzkraftbelastung 24 jederzeit wiederholt und dabei gleichzeitig der Ladungsverstärker 3 erneut kalibriert werden. Dieser Kalibriervorgang könnte so oft wiederholt werden, bis der vorgegebene maximale Druckwert zu einem einwandfreien Herstellungsprozess führt. Dies könnte im Laufe des Herstellungsprozesses experimentell ohne skalierbaren Kraft- oder Druckwert erfolgen.

Der Ladungsverstärker 3 der Messkette kann nicht nur auf Herstellungsprozesse, sondern auch auf andere Qualitäts- oder Prozessüberwachungsvorgänge selbsttätig kalibriert werden. So können beispielsweise die Qualität hergestellter Schalter durch das dafür als Referenz festgestellte maximal auftretende Drehmoment kalibriert und anschließend die anderen Schalter danach überprüft werden. Im Grunde sind alle dynamischen Prozesse oder Vorgänge kalibrierbar, die einer Kraftbelastung des piezoelektrischen Aufnehmers 1 mit einem Maximum zugänglich sind. So kann die Kalibrierung auch mit einem skalierten Maximum erfolgen, wenn als Referenzbelastung eine skalierte maximale Belastung von z. B. 100 kN kurzzeitig aufgebracht wird. Allerdings können auch andere Vorgänge oder Prozesse zur Kalibrierung verwendet werden, wenn bei deren Herstellung, Prüfung oder Überwachung kurzzeitig ein Maximum an Kraft, Druck, Beschleunigung oder Drehmoment auftritt, das mit einem piezoelektrischen Aufnehmer 1 erfassbar ist. Dabei können die Ausgangssignale des Ladungsverstärkers 3 in einem Produktionsablauf auch einer externen Auswerte- oder Steuerungsvorrichtung weitergegeben werden, die dann zum Überwachen, Regeln, Steuern oder Optimieren des Produktionsablaufs dient.

## Patentansprüche

1. Verfahren zum Kalibrieren eines Ladungsverstärkers (3) einer piezoelektrischen Messkette mit mindestens einem piezoelektrischen Kraftaufnehmer (1) und dem daran angeschlossenen Ladungsverstärker (3), bei dem der Kraftaufnehmer (1) mit mindestens einer Referenzkraft (Fₘₐₓ) belastet wird, dessen zugehöriger Ausgangsspannungswert (22) des Ladungsverstärkers (3) mit einem weiteren Ausgangsspannungswert (23) ohne Belastung (F₀) oder mindestens einer weiteren Referenzkraftbelastung einer Vielzahl von Messwerten (21) zugeordnet werden, die auf einer Geraden verlaufen, die mindestens die beiden Ausgangsspannungswerte (22, 23) schneidet, **dadurch gekennzeichnet, dass** die Kalibrierung im fest eingebauten Betriebszustand des Kraftaufnehmers (1) in einer Vorrichtung zur Herstellung, zur Prozessüberwachung oder zur Prozesssteuerung mit Hilfe einer mit dem Ladungsverstärker (3) verbundenen Rechenschaltung (4) selbsttätig erfolgt, indem durch ein externes erstes Schaltsignal zum Aktivieren der Kalibrierung vor oder während eines Referenzprozessablaufs mindestens ein Referenzwert für die im Prozess auftretende Maximalkraftbelastung (24) durch die Rechenschaltung (4) erfasst und gespeichert wird und damit die Verstärkung des Ladungsverstärkers (3) durch die Rechenschaltung (4) so gesteuert wird, dass dieser Maximalkraftbelastung (24) die maximale Ausgangsspannung (22) des Ladungsverstärkers (3) zugeordnet wird.

2. Verfahren zum Kalibrieren eines Ladungsverstärkers (3) nach Anspruch 1, wobei der Maximalkraftbelastung (24) eine maximale Ausgangsspannung (22) minus einer Differenz zu einem vorgegebenen Überlastgrenzwert zugeordnet wird.

3. Verfahren zum Kalibrieren eines Ladungsverstärkers (3) nach Anspruch 1, wobei der Ladungsverstärker (3) vor dem Referenzprozessablauf (19) zurückgesetzt und dann mit einem ersten Schaltsignal aktiviert wird und während des nachfolgenden Referenzprozessablaufs die Maximalkraftbelastung (24) als Eingangsmesssignalwert (Q) durch den Kraftaufnehmer (1) erfasst und in der Rechenschaltung (4) gespeichert wird und mit mindestens einem vorgegebenen Mindesteingangssignalwert (Qₘᵢₙ) verglichen wird, wobei ein Unterschreiten dieses Mindesteingangssignalwerts (Qₘᵢₙ) am Ausgang (16) der Rechenschaltung (4) signalisiert wird.

4. Verfahren zum Kalibrieren eines Ladungsverstärkers (3) nach Anspruch 1, wobei während des Referenzprozessablaufs (19) durch den Kraftaufnehmer (1) ein erfasster Eingangsmesssignalwert (Q) für die Maximalkraftbelastung (24) in der Rechenschaltung (4) gespeichert und mit einem vorgegebenen maximalen Eingangssignalgrenzwert (Qₘₐₓ) verglichen wird und bei einem Überschreiten dieses Eingangssignalgrenzwerts (Qₘₐₓ) am Ausgang (17) der Rechenschaltung (4) dies signalisiert wird.

5. Verfahren zum Kalibrieren eines Ladungsverstärkers (3) nach Anspruch 1, wobei ein während des Referenzprozessablaufs durch den Kraftaufnehmer (1) erfasster Eingangsmesssignalwert (Q) für die Maximalkraftbelastung (24) in der Rechenschaltung (4) gespeichert und mit einem Mindesteingangssignalwert (Qₘᵢₙ) und einem maximalen Eingangssignalgrenzwert (Qₘₐₓ) verglichen wird und bei einem Überschreiten des Mindesteingangssignalwerts (Qₘᵢₙ) oder bei einem Unterschreiten des maximalen Eingangssignalgrenzwerts (Qₘₐₓ) eine selbsttätige Kalibrierung durchgeführt wird und deren Beendigung durch mindestens ein zweites Schaltsignal am Ausgang (16, 17) der Rechenschaltung (4) signalisiert wird.

6. Verfahren zum Kalibrieren eines Ladungsverstärkers (3) nach Ansprüchen 3 oder 4, wobei beim Unterschreiten eines Mindesteingangssignalwerts (Qₘᵢₙ) oder beim Überschreiten eines maximalen Eingangssignalgrenzwerts (Qₘₐₓ) die Kalibrierung mindestens bei einem der nachfolgenden Prozessabläufe so lange wiederholt wird, bis der Mindesteingangssignalwert (Qₘᵢₙ) überschritten und der maximale Eingangssignalgrenzwert (Qₘₐₓ) unterschritten ist.

7. Verfahren zum Kalibrieren eines Ladungsverstärkers (3) nach einem der vorhergehenden Ansprüche, wobei ein Mindesteingangssignalwert (Qₘᵢₙ) oder dessen Bereich und ein maximaler Eingangssignalgrenzwert (Qₘₐₓ) oder der Bereich zwischen diesen Werten in einer TEDS-Speicherschaltung (20) abgespeichert wird und nachfolgend von der elektronischen Rechenschaltung (4) oder einer externen Auswertevorrichtung auslesbar ist und zur Kalibrierung der Rechenschaltung (4) zugeführt wird.

8. Vorrichtung zur Durchführung des Verfahrens nach einem der vorhergehenden Ansprüche, die mindestens einen piezoelektrischen Kraftaufnehmer (1) umfasst, der mit dem Ladungsverstärker (3) als Messschaltung (2) verbunden ist, der die Belastung des Kraftaufnehmers (1) verstärkt und an seinem Messausgang (5) als Messspannungssignale ausgibt, die der Belastung proportional sind, **dadurch gekennzeichnet, dass** mindestens der Kraftaufnehmer (1) in einer Vorrichtung zur Herstellung, zur Prozessüberwachung oder zur Prozesssteuerung fest eingebaut ist, wobei der Kraftaufnehmer (1) mit der Messschaltung (2) verbunden ist, die den Ladungsverstärker (3) und mindestens eine programmgesteuerte Rechenschaltung (4) mit mindestens einem Kalibriereingang (14) enthält und die so ausgebildet ist, dass durch die Beaufschlagung des Kalibriereingangs (14) mit mindestens einem externen ersten Schaltsignal zum Aktivieren der Kalibrierung vor oder während des Messvorgangs eine selbsttätige Kalibrierung durchführbar ist.

9. Vorrichtung nach Anspruch 8, wobei die Messschaltung (2) eine TEDS-Speicherschaltung (20) umfasst, in der Kennwerte des Kraftaufnehmers (1) auslesbar gespeichert sind, die zur Messung der Kraftbelastung und zur selbsttätigen Kalibrierung dienen.

## Claims

1. A method for calibrating a charge amplifier (3) of a piezoelectric measuring chain comprising at least one piezoelectric force transducer (1) and the charge amplifier (3) connected thereto, wherein at least one reference force (Fₘₐₓ) is applied to the force transducer (1), whose respective output voltage (22) from the charge amplifier (3), together with a further output voltage value (23) for no load (F₀) or at least one further reference force load, are associated with a plurality of measured values (21) which lie on a straight line intersecting at least the two output voltage values (22, 23), **characterised in that** the calibration is performed automatically, when the force transducer (1) is in its fixedly installed operating mode in a device for manufacturing, for process monitoring or for process control, with the aid of a computing circuit (4) connected to the charge amplifier (3), such that an external first switching signal activates calibration before or during a referencing process, in which at least one reference value for the maximum load (24) occurring in said process is detected and stored by the computing circuit (4), and so that the amplification of the charge amplifier (3) is controlled by the computing circuit (4) in such a way that said maximum load (24) is associated with the maximum output voltage (22) of the charge amplifier (3).

2. The method according to claim 1 for calibrating a charge amplifier (3), wherein the maximum load (24) is associated with a maximum output voltage (22) minus a difference from a predefined overload threshold value.

3. The method according to claim 1 for calibrating a charge amplifier (3), wherein the charge amplifier (3) is reset prior to the referencing process (19) and then activated by means of a first switching signal, and during the following referencing process the maximum load (24) is detected as an input measurement signal value (Q) by the force transducer (1) and stored in the computing circuit (4) and compared with at least one predefined minimum input signal value (Qₘᵢₙ), wherein a signal is outputted at the output (16) of the computing circuit (4) whenever an input signal value is less than said minimum input signal value (Qₘᵢₙ).

4. The method according to claim 1 for calibrating a charge amplifier (3), wherein an input measurement signal value (Q) for the maximum load (24) detected by the force transducer (1) during the referencing process (19) is stored in the computing circuit (4) and compared with a predefined maximum input signal threshold value (Qₘₐₓ), and a signal is outputted at the output (17) of the computing circuit (4) whenever an input signal value exceeds said input signal threshold value (Qₘₐₓ).

5. The method according to claim 1 for calibrating a charge amplifier (3), wherein an input measurement signal value (Q) for the maximum load (24) detected by the force transducer (1) during the referencing process is stored in the computing circuit (4) and compared with a minimum input signal value (Qₘᵢₙ) and a maximum input signal threshold value (Qₘₐₓ), and automatic calibration is performed if said input signal value exceeds the minimum input signal value (Qₘᵢₙ) or is less than the maximum input signal threshold value (Qₘₐₓ), and completion of automatic calibration is signalled by at least one second switching signal at the output (16, 17) of the computing circuit (4).

6. The method according to claim 3 or 4 for calibrating a charge amplifier (3), wherein if the input signal value is less than a minimum input signal value (Qₘᵢₙ) or exceeds a maximum input signal threshold value (Qₘₐₓ), the calibration is repeated in at least one of the following process cycles until the input signal value exceeds the minimum input signal value (Qₘᵢₙ) and is less than the maximum input signal threshold value (Qₘₐₓ).

7. The method for calibrating a charge amplifier (3) according to any one of the preceding claims, wherein a minimum input signal value (Qₘᵢₙ), or its range, and a maximum input signal threshold value (Qₘₐₓ), or the range between said values, is stored in a TEDS memory circuit (20) and can then be read by the electronic computing circuit (4) or an external analyser and supplied to the computing circuit (4) for calibration.

8. A device for performing the method according to any one of the preceding claims, comprising at least one piezoelectric force transducer (1) connected to the charge amplifier (3) as a measurement circuit (2), which amplifies the load applied to the force transducer (1) and outputs it at its measurement output (5) as measurement voltage signals which are proportional to said load, **characterised in that** at least the force transducer (1) is fixedly installed in a device for manufacturing, for process monitoring or for process control, wherein the force transducer (1) is connected to the measurement circuit (2) which contains the charge amplifier (3) and at least one program-controlled computing circuit (4) having at least one calibration input (14) and which is configured in such a way that calibration can be performed automatically by applying to the calibration input (14) at least one external first switching signal for activating calibration before or during the measurement operation.

9. The device according to claim 8, wherein the measurement circuit (2) includes a TEDS memory circuit (20) in which characteristic values of the force transducer (1) are stored in a readable format and are used for measuring the load and for automatic calibration.

## Revendications

1. Procédé de calibrage d'un amplificateur de charge (3) d'une chaîne de mesure piézoélectrique ayant au moins un capteur de force (1) piézoélectrique et l'amplificateur de charge (3) qui lui est connecté, dans lequel le capteur de force (1) est chargé avec au moins une force de référence (Fₘₐₓ), dont la valeur de tension de sortie (22) correspondante de l'amplificateur de charge (3) en compagnie d'une autre valeur de tension de sortie (23) sans charge (F₀) ou en compagnie d'au moins une autre charge de force de référence sont associées aux une pluralité de valeurs de mesure (21) s'étendant sur une droite coupant au moins les deux valeurs de tension de sortie (22, 23), **caractérisé en ce que** le calibrage, dans l'état de fonctionnement à montage fixe du capteur de force (1), s'effectue automatiquement dans un dispositif de fabrication, de surveillance de processus ou de contrôle de processus au moyen d'un circuit de calcul (4) relié à l'amplificateur de charge (3), dans lequel, par un premier signal de commutation externe destiné à l'activation du calibrage avant ou pendant un déroulement du processus de référence, au moins une valeur de référence pour la charge de force maximale (24) apparue dans le processus est détectée et mémorisée par le circuit de calcul (4) permettant ainsi à l'amplification de l'amplificateur de charge (3) d'être contrôlée par le circuit de calcul (4) de sorte que la tension de sortie maximale (22) de l'amplificateur de charge (3) soit attribuée à cette charge de force maximale (24).

2. Procédé de calibrage d'un amplificateur de charge (3) selon la revendication 1, dans lequel une tension de sortie maximale (22) moins une différence par rapport à une valeur limite de surcharge prédéterminée est attribuée à la charge de force maximale (24).

3. Procédé de calibrage d'un amplificateur de charge (3) selon la revendication 1, dans lequel l'amplificateur de charge (3) est réinitialisé avant le déroulement du processus de référence (19) et ensuite activé par un premier signal de commutation, et pendant le déroulement du processus de référence suivant, la charge de force maximale (24) est détectée sous forme de valeur de signal de mesure d'entrée (Q) par le capteur de force (1), mémorisée dans le circuit de calcul (4) et comparée avec au moins une valeur de signal d'entrée minimale (Qₘᵢₙ) prédéterminée, un passage sous cette valeur de signal d'entrée minimale (Qₘᵢₙ) étant signalé à la sortie (16) du circuit de calcul (4).

4. Procédé de calibrage d'un amplificateur de charge (3) selon la revendication 1, dans lequel, pendant le déroulement du processus de référence (19), une valeur de signal de mesure d'entrée (Q) pour la charge de force maximale (24) est détectée par le capteur de force (1), mémorisée dans le circuit de calcul (4) et comparée à une valeur limite de signal d'entrée maximale (Qₘₐₓ) prédéterminée, un dépassement de cette valeur limite de signal d'entrée (Qₘₐₓ) étant signalé à la sortie (17) du circuit de calcul (4).

5. Procédé de calibrage d'un amplificateur de charge (3) selon la revendication 1, dans lequel, pendant le déroulement du processus de référence (19), une valeur de signal de mesure d'entrée (Q) pour la charge de force maximale (24) est détectée par le capteur de force (1), mémorisée dans le circuit de calcul (4) et comparée à une valeur de signal d'entrée minimale (Qₘᵢₙ) et une valeur limite de signal d'entrée maximale (Qₘₐₓ), dans lequel un calibrage automatique s'effectue lors d'un dépassement de la valeur de signal d'entrée minimale (Qₘᵢₙ) ou lors d'un passage sous la valeur limite de signal d'entrée maximale (Qₘₐₓ) et dont la fin est signalée par au moins un deuxième signal de commutation à la sortie (16, 17) du circuit de calcul (4).

6. Procédé de calibrage d'un amplificateur de charge (3) selon la revendication 3 ou 4, dans lequel, lors du passage sous une valeur de signal d'entrée minimale (Qₘᵢₙ) ou lors du dépassement d'une valeur limite de signal d'entrée maximale (Qₘₐₓ), le calibrage est répété au moins lors d'un des processus suivants jusqu'au dépassement de la valeur de signal d'entrée minimale (Qₘᵢₙ) et jusqu'au sous-dépassement de la valeur limite de signal d'entrée maximale (Qₘₐₓ).

7. Procédé de calibrage d'un amplificateur de charge (3) selon l'une des revendications précédentes, dans lequel une valeur de signal d'entrée minimale (Qₘᵢₙ) ou de la plage de celle-ci et une valeur limite de signal d'entrée maximale (Qₘₐₓ) ou la plage entre ces valeurs sont enregistrées dans un circuit de mémoire TEDS (20), peuvent ensuite être lues par le circuit de calcul (4) électronique ou par un dispositif d'évaluation externe, et sont amenées au circuit de calcul (4) à des fins de calibrage.

8. Dispositif pour la mise en oeuvre d'un procédé selon l'une des revendications précédentes, ledit dispositif comprenant au moins un capteur de force (1) piézoélectrique qui est relié à un amplificateur de charge (3) en tant que circuit de mesure (2), lequel amplifie la charge du capteur de force (1) et la délivre à sa sortie de mesure (5) sous forme de signaux de tension de mesure proportionnels à la charge, **caractérisé en ce qu'**au moins le capteur de force (1) est monté de manière fixe dans un dispositif de fabrication, de surveillance de processus ou de contrôle de processus, dans lequel le capteur de force (1) est relié au circuit de mesure (2), lequel contient l'amplificateur de charge (3) et au moins un circuit de calcul (4) commandé par programme avec au moins une entrée de calibrage (14) et lequel est formé de façon à pouvoir réaliser un calibrage automatique par la sollicitation de l'entrée de calibrage (14) avec au moins un premier signal de commutation externe destiné à activer le calibrage avant ou pendant le processus de mesure.

9. Dispositif selon la revendication 8, dans lequel le circuit de mesure (2) comprend un circuit de mémoire TEDS (20), dans lequel des valeurs caractéristiques du capteur de force (1) sont mémorisées de manière lisible, lesquelles servent à la mesure de la charge de force et au calibrage automatique.
